# EUROPEAN PATENT SPECIFICATION

(11) **EP 1 576 497 B1**
(45) Date of publication and mention of the grant of the patent: **31.10.2007**
(21) Application number: 03786379.2
(22) Date of filing: 26.12.2003
(51) Int. Cl.: G06F 17/27

(54) **ELECTRONIC DICTIONARY WITH ILLUSTRATIVE SENTENCES**
ELEKTRONISCHES WÖRTERBUCH MIT BEISPIELSÄTZE
DICTIONNAIRE ÉLECTRONIQUE AVEC DES EXEMPLES DE PHRASES

(30) Priority: 27.12.2002 JP 2002381964
(43) Date of publication of application: 21.09.2005
(73) Proprietor: CASIO COMPUTER CO., LTD., Shibuya-ku, Tokyo 151-8543 (JP)
(72) Inventor: KOJO, Takashi, Ome-shi, Tokyo 198-0032 (JP)
(74) Representative: Grünecker, Kinkeldey, Stockmair & Schwanhäusser Anwaltssozietät
(86) International application number: PCT/JP2003/017034
(87) International publication number: WO 2004/061706

(56) References cited:
- GB-A- 2 364 146
- ANONYMOUS: "CANON IDF-3000 Electronic DIctionary. English Instruction Manual" CANON, [Online] March 2000 (2000-03), XP002310404 Retrieved from the Internet: URL:http://www.wordtankcentral.com/manuals .php> [retrieved on 2004-12-13]
- ANONYMOUS: "CANON IDF-4100 Electronic Dictionary Instruction Manual" CANON, [Online] November 2002 (2002-11), XP002310405 Retrieved from the Internet: URL:http://www.jbox.com/STUDYAIDS/STWT_1.h tml> [retrieved on 2004-12-13]
- ANONYMOUS: "Japanese-English-Japanese Electronic Dictionaries" BORNPLAYDIE.COM, [Online] 10 December 2004 (2004-12-10), XP002310406 Retrieved from the Internet: URL:http://www.bornplaydie.com/japan/dicti onary/dictionary.htm> [retrieved on 2004-12-10]

## Description

### Technical Field

The present invention relates to an information display control device and a program which are adapted to retrieve an illustrative sentence containing a specified retrieval word.

### Background Art

An electronic dictionary is hitherto known (cf. e.g. Anonymous: "CANON IDF-3000 Electronic Dictionary. English Instruction Manual", CANON March 2000) which is a kind of information display control device and has a dictionary data base (DB). When a retrieval word is input, the electronic dictionary retrieves an entry word corresponding to the retrieval word from the dictionary DB and displays related information, such as the meaning of the retrieved entry word, illustrative sentences and idiomatic phrases using the entry word, pronunciation, explanation, etc. Also, an electronic dictionary is known which has a function of, when a word or a phrase contained in related information of a displayed entry word is specified, displaying information related to that word and phrase.

The electronic dictionary has a jump function. By using this function it becomes possible to specify a character string contained in explanatory information in, for example, a Japanese-language dictionary and display explanatory information of an entry word in the same Japanese-language dictionary or another dictionary, such as a Japanese-English dictionary or encyclopedia, using the character string as a retrieval word.

The jump function of the electronic dictionary is one which, when explanatory information corresponding to an entry word is being displayed, allows the user to specify a character string contained in the explanatory information and performs retrieval again using the specified character string as a retrieval word.

With the conventional electronic dictionaries, the following inconvenience is encountered in looking up the meaning of a word contained in an illustrative sentence displayed as the result of retrieval. That is, when the conventional jump function is performed on the word contained in the displayed illustrative sentence, explanatory information about the word is read from the dictionary DB and displayed from the beginning. For this reason, the user has to search the displayed explanatory information for the meaning of the word. This makes the electronic dictionaries difficult to handle.

In recent years, electronic dictionaries of the so-called full-content type have come into wide use which contain electronic versions of all paper-based dictionaries. With this type of dictionary, there is a large amount of explanatory information about one entry word and such explanatory information is displayed at a time. In order to search for desired explanatory information, therefore, it is required for the user to scroll through some pages. This is time-consuming.

### Disclosure of Invention

It is an object of the present invention to provide an information display control device and a program which are adapted to appropriately display the meaning of a word contained in an illustrative sentence.

To solve the above problem, in the information display control device according to an aspect of the present invention, entry words are associated with their explanatory information for each of their meanings in entry word information storage means, illustrative sentences containing entry words stored in the entry word information storage means are associated with entry words and their meanings in illustrative sentence storage means, and, when a word as a retrieval word is input, illustrative sentences containing the input word are read from the illustrative sentence storage means and then displayed. Further, when one of the displayed illustrative sentences is specified, the entry word used in the specified illustrative sentence and its meaning are read from the illustrative sentence storage means, and the read entry word and explanatory information corresponding to its meaning are read from the entry word information storage means and then displayed.

Thus, after illustrative sentences containing a retrieval word have been displayed, a desired one of the illustrative sentences is specified, and the meaning of the entry word used in the specified illustrative sentence can be displayed. Even if the entry word bears a number of meanings, explanatory information corresponding to the meaning of the entry word used in the illustrative sentence is displayed immediately, allowing the user to confirm the meaning of the entry word used in the illustrative sentence with a single glance without scrolling.

### Brief Description of Drawings

FIG. 1 is a perspective general view of a portable electronic dictionary according to one embodiment to which the present invention is applied;
FIG. 2 is a block diagram of the portable electronic dictionary shown in FIG. 1;
FIG. 3 shows an example of a data structure of the entry word data table shown in FIG. 2;
FIG. 4 shows an example of a data structure of the illustrative sentence data table shown in FIG. 2;
FIG. 5A shows an example of a data structure of the idiomatic phrase data table shown in FIG. 2;
FIG. 5B shows an example of a data structure of the word/illustrative sentence data table shown in FIG. 2;
FIG. 6 is a flowchart illustrating the operation of the portable electronic dictionary for jump-to-source processing;
FIG. 7 is a flowchart illustrating the operation of the portable electronic dictionary for illustrative sentence retrieval and display processing;
FIGS. 8A, 8B and 8C show exemplary display screens which appear on the display unit shown in FIG. 2;
FIGS. 9A, 9B and 9C show exemplary display screens which appear on the display unit;
FIGS. 10A and 10B show exemplary stored contents of the retrieval word storage area, the illustrative sentence storage area and the selected word storage area shown in FIG. 2; and
FIG. 11 shows exemplary stored contents of the retrieval word storage area, the illustrative sentence storage area and the selected word storage area.

### Best Mode for Carrying Out the Invention

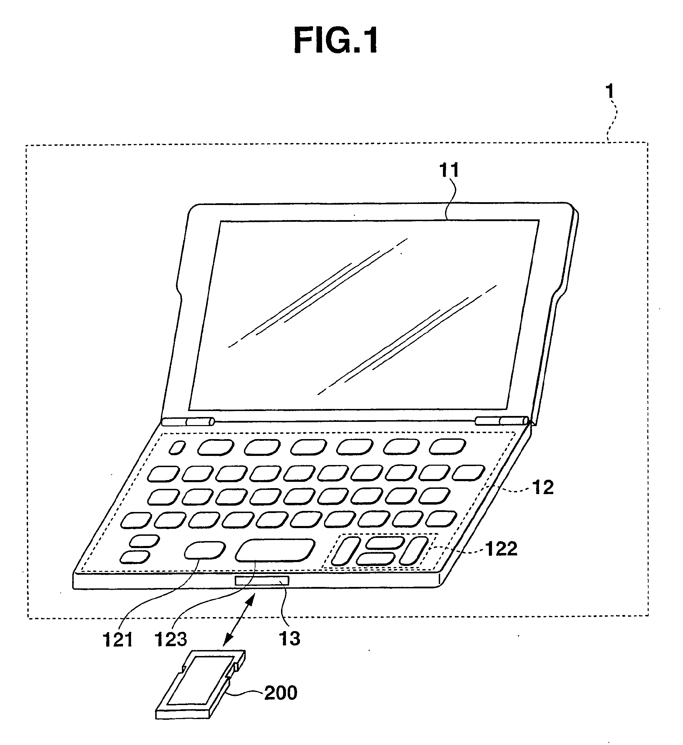

An embodiment of an information display control device according to the present invention will be described in detail hereinafter with reference to FIGS. 1 through 11. In the description which follows, the present invention will be described in terms of an application to a folding type of portable electronic dictionary which is one type of information display control device; however, this is by way of illustration only and not by way of limitation.

The portable electronic dictionary has various electronic dictionaries (dictionary DBs) built in, such as a Japanese-language dictionary, an English-Japanese dictionary, a Japanese-English dictionary, a thesaurus, a proverb dictionary, etc. In these dictionary DBs, each entry word is associated with character data for explaining it, image data, moving image data and audio data. The user is allowed to make a selection among the dictionaries, then enter a word and cause the explanation etc. for that word to be displayed. In what follows, the embodiment will be described taking a portable electronic dictionary having a built-in English-Japanese dictionary DB selected among a plurality of built-in dictionaries, by way of example.

FIG. 1 shows, in perspective, an example of a portable electronic dictionary. As shown, the portable electronic dictionary 1 includes a display screen 11, a group of keys 12, a built-in battery (not shown) and is housed in a casing made of metal or resin.

The display screen 11 is adapted to display various items of data, such characters, signs, etc., which correspond to depressed keys and are required to use the portable electronic dictionary. The display screen 11 comprises, for example, LCD (Liquid Crystal Display) devices or ELD (Electronic Luminescent Display) devices and is implemented by one or more devices.

Each of the keys in the key group 12 is allocated an inherent function. The user operates the portable electronic dictionary 1 by depressing the keys. Specifically, the keys include character entry keys, dictionary select keys, and an example display key that allows an example (quotation) for a specified word to be displayed.

Additionally, the key group 12 has a jump key 121, a direction key group 122, and a determination key 123. The direction key group 122 is comprised of four keys indicating up, down, right, and left. When the jump key 121 is depressed, the beginning word of words being displayed is selected. When one key of the direction key group 122 is depressed, another word is selected in accordance with the specified direction.

The direction key group 122 is used in selecting desired items on various setting screens, in scrolling through displayed information on the screen, etc. The determination key 123 is used in carrying out various modes, in determining selected items on the setting screens, etc.

The portable electronic dictionary 1 further includes a slot 13 into which a storage medium 200 is loaded. The storage medium 200 is adapted to store various dictionary data bases and programs and is comprised of, for example, a memory card or a hard disk. The slot 13 is a device which has the storage medium 200 removably mounted in it and allows the medium 200 to be read from and written into. The slot 13 may be configured suitably according to the type of the storage medium 200.

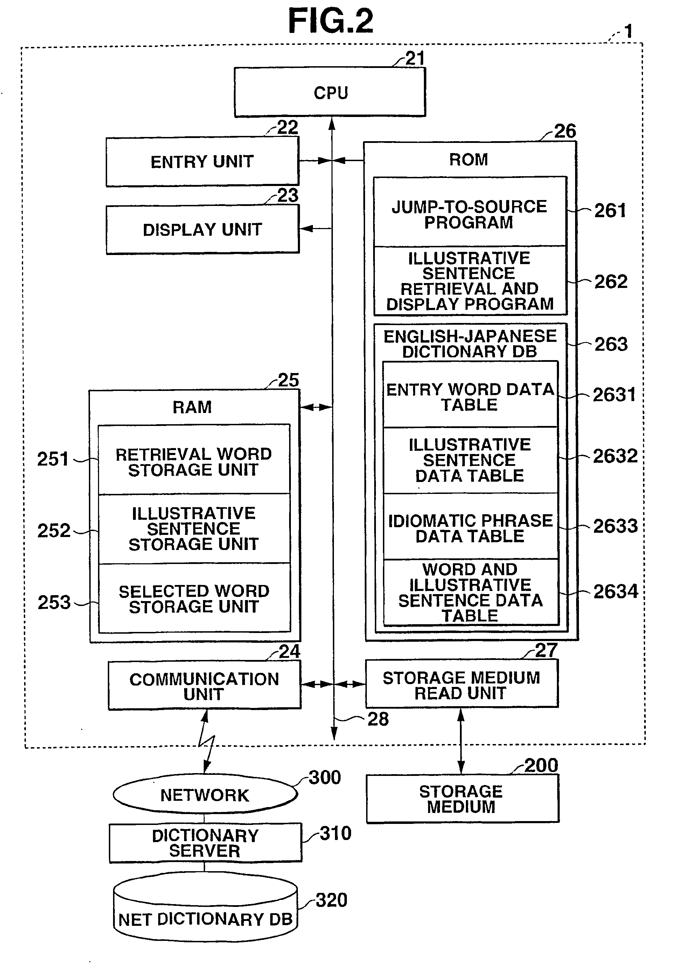

FIG. 2 is a block diagram of the portable electronic dictionary 1. As shown, the portable electronic dictionary 1 is composed of a CPU 21, an entry unit 22 including the group of keys 12 of FIG. 1, a display unit 23 including the display screen 11, a communication unit 24, a RAM 25, a ROM 26, and a storage medium read unit 27, which are interconnected by a bus 28.

The CPU 21 executes program-based processing according to input commands, sends instructions to each of the functional units, makes data transfers, and exercises control over the portable electronic dictionary 1. Specifically, the CPU 21 reads a program from the ROM 26 in response to a key depression signal from the input unit 22, then carries out processing in accordance with that program, stores the results of the processing into the RAM 25, outputs a display signal for displaying the processing results to the display unit 23, and causes it to display the resulting information.

In addition, the CPU 21 reads a jump-to-source program 261 to be described later and then carries out a jump-to-source process. Thereby, an illustrative sentence that contains all input words is retrieved and displayed and the meaning of a selected word in the displayed illustrative sentence is displayed.

Specifically, the CPU 21 displays a data entry panel on the display unit 23 to allow the user to enter a retrieval word. When the user enters a retrieval word composed of a plurality of words, the CPU retrieves an illustrative sentence that contains that retrieval word from an English-Japanese dictionary DB 263 and displays it on the display unit 23. Further, when the user selects a word from the illustrative sentence and then performs a given operation, the CPU displays the meaning of the selected word on the display unit 23.

The entry unit 22 is an input device which is equipped with a set of keys necessary for entry of characters, such as kana characters, alphabetic characters, etc., and function selection. When a key is depressed, a key depression signal is output to the CPU 21. In particular, the entry unit implements entry means for entry of a retrieval word, an instruction to select from dictionaries, an instruction to execute retrieval, and instruction to switch modes. The entry unit 22 corresponds to the key set 12 shown in FIG. 1.

The display unit 23 causes various screens to appear on the basis of display signals input from the CPU 21. This display unit corresponds to the display screen 11 shown in FIG. 1.

The communication unit 24 is comprised of communication equipment for sending or receiving predetermined information to or from some other device (for example, a dictionary server 310) over a network 300. This network is comprised of a network, such as a LAN, a WAN, Internet, etc. The CPU 21 performs control for communication with external equipment over the communication unit 24 and a communication line, such as a telephone line, ISDN line, radio communication line, dedicated line, CATV line, etc.

Note that the electronic dictionary and external equipment may be directly linked through cable or radio communication without being linked through the network 300.

The dictionary server 310 makes a net dictionary DB 320 managed by it open to the public so that dictionary data stored in that dictionary DB can be retrieved and displayed. Specifically, the dictionary server 310, upon receipt of a request for retrieval of dictionary data sent from the portable electronic dictionary 1, retrieves user-specified entry word data from the net dictionary DB 320 and sends explanatory information for the entry word data to the portable electronic dictionary 1. The net dictionary DB 320 is updated as required by addition of new words by way of example. When the dictionary data is updated, the date of updating is also updated.

The RAM 25 has memory areas that temporarily store various programs that the CPU 21 executes and data associated with execution of these programs. In the present embodiment, in particular, a retrieval word storage area 251, an illustrative sentence storage area 252 and a selected word storage area 253 are prepared.

The retrieval word storage area 251 stores words entered through the entry unit 22. Hereinafter, of entered words, each word is referred to as a single retrieval word and a collection of two or more words is referred to as a plural retrieval word. A mere retrieval word refers to a word or words entered by the user for retrieval, which may consist of either a single word or two or more words (i.e., the single retrieval word and the plural retrieval word).

The illustrative sentence storage area 252 stores illustrative sentences, sources, and translations which were extracted as the result of execution of the jump-to-source processing by the CPU 21.

The ROM 26 stores programs and data for implementing various functions of the portable electronic dictionary 1. In the present embodiment, a jump-to-source program 261, an illustrative sentence retrieval and display program 262 and an English-Japanese dictionary DB 263 are stored in the ROM 26.

The jump-to-source program 261 is one which causes the CPU 21 to execute a jump-to-source process of retrieving an illustrative sentence that contains a retrieval word entered by the user from the English-Japanese dictionary DB 263, displaying it on the display unit 23 and, when a word in the illustrative sentence is selected, and displaying the meaning of that word.

The illustrative sentence retrieval and display program 262, which is a subroutine program contained in the jump-to-source program 261, causes the CPU 21 to execute an illustrative sentence retrieval and display process of retrieving an illustrative sentence that contains an input retrieval word from the English-Japanese dictionary DB 263 and displaying it.

The English-Japanese dictionary DB 273 contains an entry word data table 2631, an illustrative sentence data table 2632, an idiomatic phrase data table 2633, and a word and illustrative sentence data table 2634.

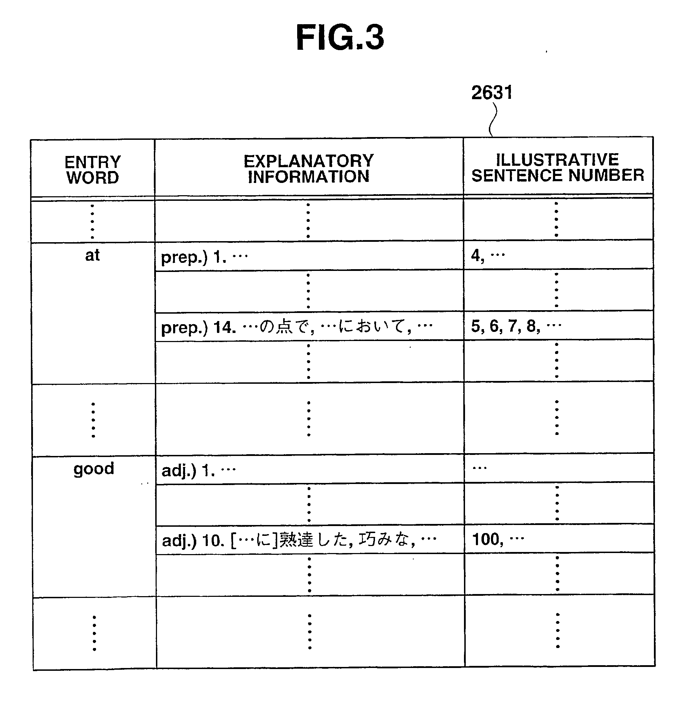

FIG. 3 shows an exemplary data structure of the entry word data table 2631. In the entry word data table 2631 are stored entry words (for example, "at") and explanatory information indicating the meanings thereof in Japanese (for example, prep 14. ··· 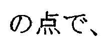 ··· 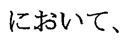 ···). The explanatory information is stored for each of the meanings of the corresponding word such as "at" or "good". Further, illustrative sentence numbers for specifying related illustrative sentences are associated with each meaning. The illustrative sentence numbers are ones which identify illustrative sentences stored in the illustrative sentence data table 2632.

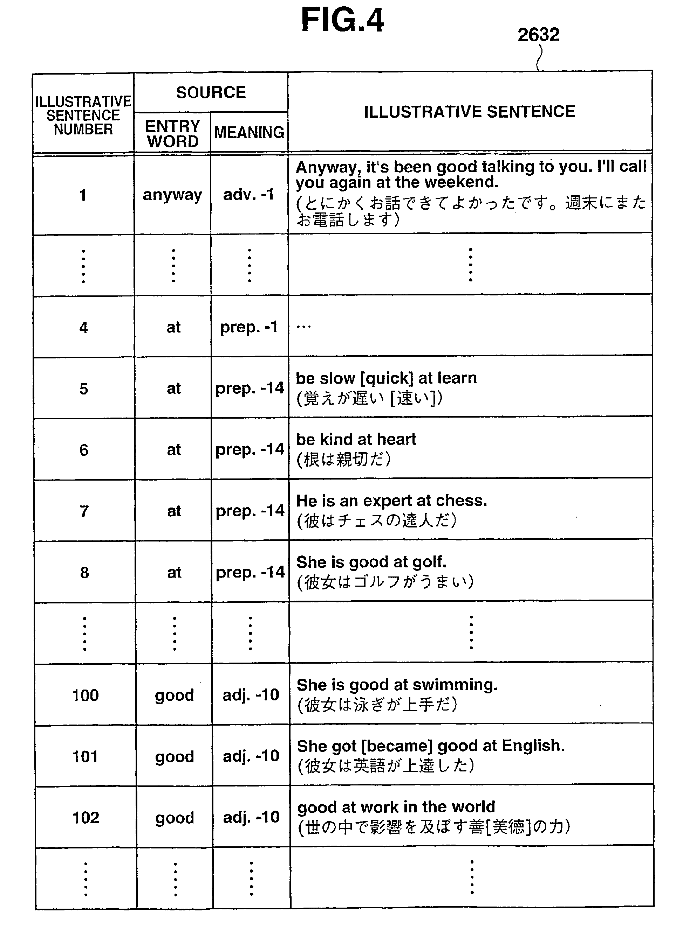

FIG. 4 shows an exemplary data structure of the illustrative sentence data table 2632. In this table, illustrative sentence numbers, sources of illustrative sentences and illustrative sentences are associated with one another. A translation of the illustrative sentences is stored together with each illustrative sentence. The source indicates an entry word to which the corresponding illustrative sentence is related and its meaning. For example, "be slow [quick] at learn", which is the illustrative sentence number 5, indicates an illustrative sentence related to the preposition 14-th (prep.-14) meaning of entry word "at".

In the description which follows, the entry word and the meaning contained in the source field of the illustrative sentence data table 2632 are referred to as "source entry word" and "source meaning", respectively.

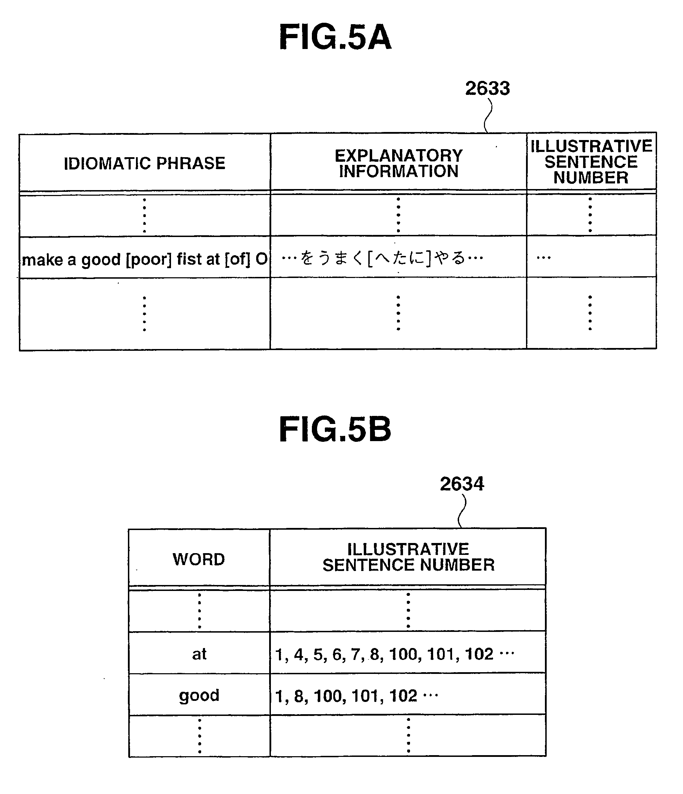

FIG. 5A shows an exemplary data structure of the idiomatic phrase data table 2633. In this table 2633, idiomatic phrases (for example, "make a good [poor] fist at [of] ∼") are mapped to explanatory information indicating the meanings thereof (for example, "· · · 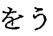 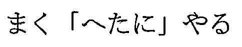 ").

FIG. 5B shows an exemplary data structure of the word and illustrative sentence data table 2634. In this table, words are mapped to numbers of illustrative sentences each containing a corresponding one of the words.

The storage medium read unit 27 is a function unit that reads from or writes onto the recording medium 200, such as a memory card or a hard disk. This storage medium read unit corresponds to the slot 13 shown in FIG. 1.

The CPU 21 is allowed to retrieve illustrative sentences containing a retrieval word from a dictionary DB (in this embodiment, the English-Japanese dictionary DB 263) stored in the ROM 26, dictionary DBs stored on the storage medium 200, and the net dictionary DB 320. In this case, the dictionary DBs stored on the storage medium 200 and the net dictionary DB 320 have the same data structure as the English-Japanese dictionary DB 263. The present embodiment will be described in terms of retrieval of illustrative sentences using the English-Japanese dictionary DB 263.

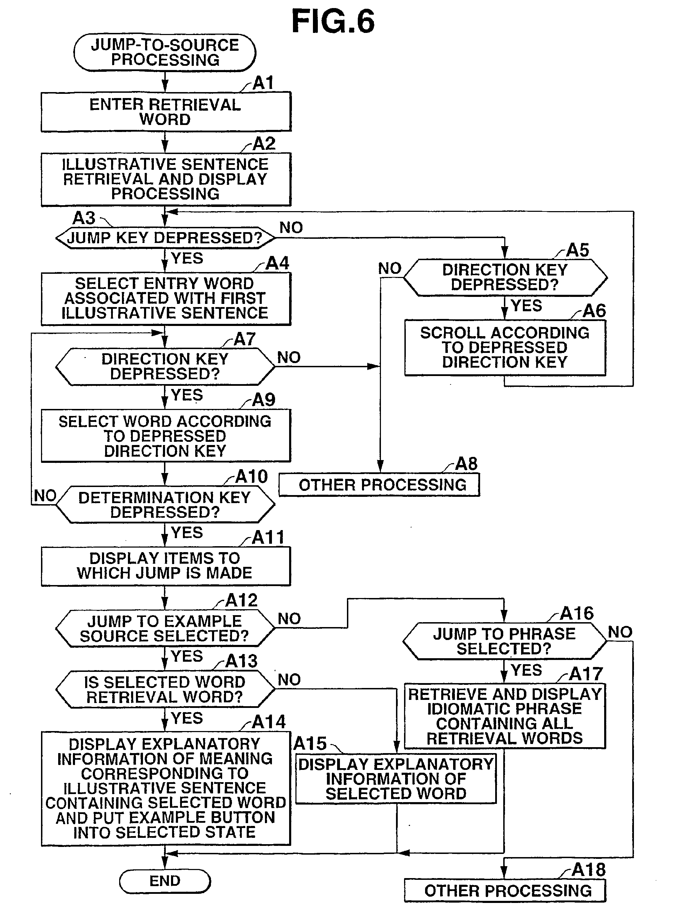

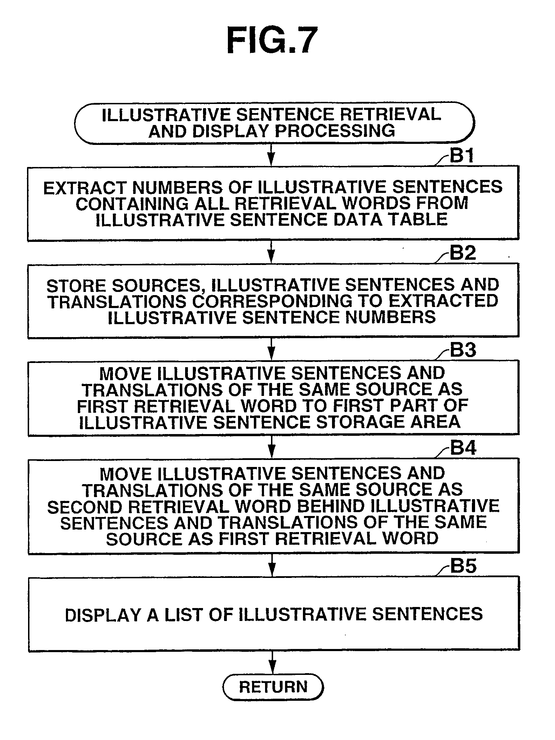

FIG. 6 is a flowchart illustrating a jump-to-source processing operation executed by the CPU 21 in accordance with the jump-to-source program 261. FIG. 7 is a flowchart illustrating an illustrative sentence retrieval and display processing operation which is a subroutine of the jump-to-source program 261. The flow of the jump-to-source processing will be described with reference to FIGS. 6 and 7.

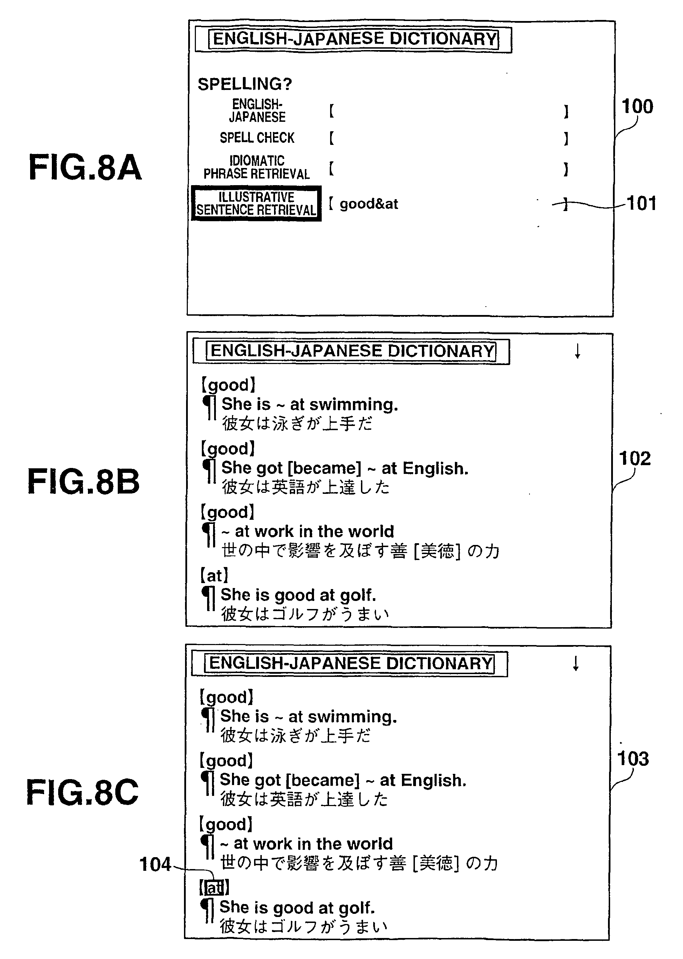

First, the CPU 21 displays such a retrieval word entry panel 100 as shown in FIG. 8A on the display unit 23. When a retrieval word is entered by the user (step A1), the CPU 21 displays characters in a character display area 101 on the panel 100 on the basis of key depression signals corresponding to depressed keys and then stores the entered retrieval words in the retrieval word storage area 251 in the RAM 25.

Suppose here that the user wants to retrieve illustrative sentences that contain words of, for example, "good" and "at". Then, the user enters the words in the form of "good & at". "&" may be replaced with another specific symbol. In the retrieval word storage area 251, the retrieval words are stored, like "good, at", in the order in which they were entered.

Next, the CPU 21 switches the procedure to the illustrative sentence retrieval and display process (step _{A}2). FIG. 7 is a flowchart illustrating the illustrative sentence retrieval and display processing operation carried out by the CPU 21 in accordance with the illustrative sentence retrieval and display program 262. First, the CPU 21 extracts the illustrative sentence numbers of illustrative sentences that contain all the retrieval words stored in the retrieval word storage area 251 from the illustrative sentence data table 2634 shown in FIG. 5B (step B1).

Specifically, when retrieval words are stored in the form of "good, at" in the retrieval word storage area 251, the CPU 21 first extracts illustrative sentence numbers (1, 8, 100, 101, 102, ...) corresponding to "good" from the word and illustrative data table 2634 and then extracts illustrative sentence numbers (1, 4, 5, 6, 7, 8, 100, 101, 102, ...) corresponding to "at". The CPU 21 next extracts a common illustrative sentence number or numbers from the illustrative sentence numbers extracted for each word.

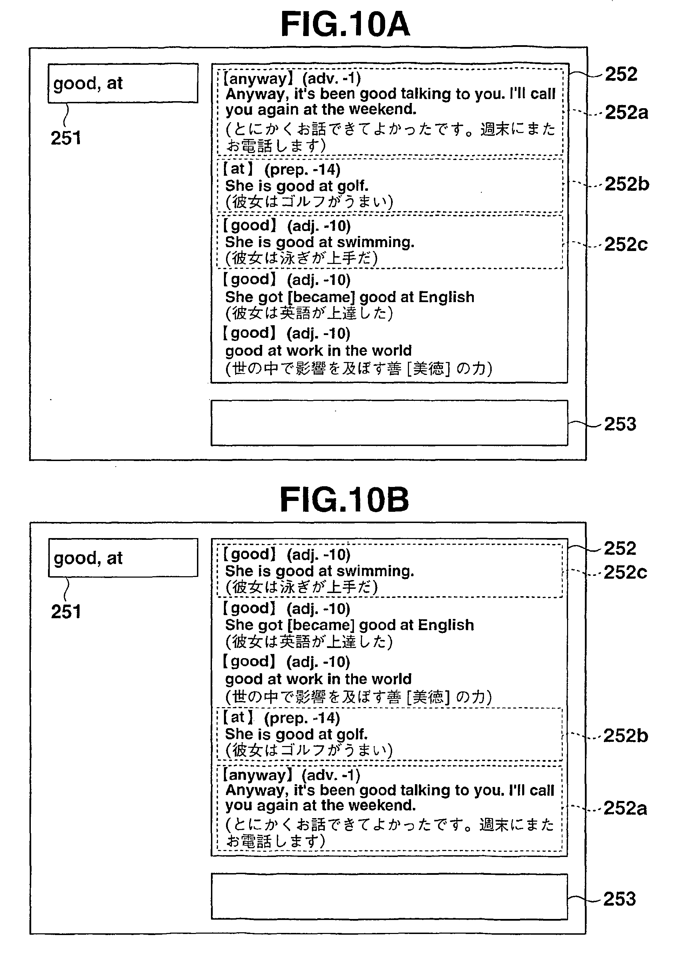

Next, the CPU 21 refers to the illustrative sentence data table 2632 shown in FIG. 4 to store illustrative sentences, sources and translations corresponding to the illustrative sentences extracted in step B1 in the illustrative sentence storage area 252 in the RAM 25 (step B2). FIG. 10A shows exemplary stored contents of the retrieval word storage area 251, the illustrative sentence storage area 252 and the selected word storage area 253 in the RAM at the termination of the process in step B2 in the illustrative sentence retrieval and display processing in the case where entry was made in the form of "good & at" at the entry unit 22. The retrieval word storage area 251 is stored with "good, at" according to the entered retrieval words. The illustrative sentence storage area 252 is stored with illustrative sentences containing both "good" and "at" and corresponding sources and translations.

The CPU 21 retrieves from the illustrative sentences stored in the illustrative sentence storage area 252 illustrative sentences the source entry words of which are identical to the first retrieval word stored in the retrieval word storage area 251, then moves the retrieved illustrative sentences and the corresponding sources and translations to the beginning part of the illustrative sentence storage area 252 and stores them there (step B3).

Specifically, since the stored contents of the retrieval word storage area 251 are "good, at" as shown in FIG. 10A, the illustrative sentence 252c the source entry word of which is "good" is moved to the first part of the illustrative sentence storage area 252 and stored. The other illustrative sentences the source entry words of which are "good" and the corresponding sources and translations are likewise moved in sequence to the first part of the illustrative storage area 252 and stored.

Subsequently, the CPU 21 retrieves from the illustrative sentences stored in the illustrative sentence storage area 252 illustrative sentences the source entry words of which are identical to the second retrieval word stored in the retrieval word storage area 251 and then moves these illustrative sentences and corresponding sources and translations to the part behind the illustrative sentences the source entry words of which are identical to the first retrieval word, sources and translations for storage (step B4).

Specifically, since the stored contents of the retrieval word storage area 251 are "good, at" as shown in FIG. 10A, the illustrative sentence 252b the source entry word of which is "at" is moved to follow behind the illustrative sentences whose source entry words are "good" and the corresponding sources and translations and then stored.

FIG. 10B shows exemplary stored contents of the retrieval word storage area 251, the illustrative sentence storage area 252 and the selected word storage area 253 at the termination of the process in step B4 in the illustrative sentence retrieval and display processing. Since the stored contents of the retrieval word storage area 251 are "good, at", the illustrative sentences the source entry words of which are "good", such as the illustrative sentence 252c, etc., are stored in the first part of the illustrative sentence storage area 252. The illustrative sentence 252b the source entry word of which is "at" is stored behind the illustrative sentences the source entry words of which are "good", such as the illustrative sentence 252c, etc., and the corresponding sources and translations. Furthermore, the illustrative sentence 252a the source entry word of which is neither "good" nor "at" is stored behind the illustrative sentences the source entry words of which are either "good" or "at" and the corresponding sources and translations.

When three or more retrieval words are stored in the retrieval word storage area 251, the CPU 21 repeats rearranging and storing of illustrative sentences and corresponding sources and translations stored in the illustrative sentence storage area 252 in accordance with the order in which the retrieval words were entered.

Next, the CPU 21 displays a list of illustrative sentences on the display unit 23 on the basis of the stored contents of the illustrative sentence storage area 252 (step B5). FIG. 8B shows an exemplary display screen 102 which appears in step B5.

The CPU 21 next goes from the illustrative sentence retrieval and display processing to step A3 in the jump-to-source processing. The CPU 21 makes a decision of whether or not the jump key is depressed (step A3). If the decision is that the jump key 121 is not depressed (NO in step A3), then the CPU 21 makes a decision of whether or not any of the direction keys 122 is depressed (step A5). If the decision is that one of the direction keys 122 is depressed (YES in step A5), then the CPU 21 scrolls the display screen of the display unit 23 in accordance with the direction specified by the key in the direction key group 122 (step A6).

If, on the other hand, the decision is that the direction key group 122 is not depressed (NO in step A5), then the CPU 21 goes to other processing (step S8). If the decision in step A3 is that the jump key 121 is depressed, the CPU 21 selects the entry word associated with the first illustrative sentence from the words displayed on the display unit 23 and then stores it in the selected word storage area 253 (step A4). The selected entry word is reversed in order to indicate that it is in the selected state.

Subsequently, the CPU 21 makes a decision of whether or not any of the direction keys 122 is depressed (step A7). If the decision is that the direction key is not depressed (NO in step A7), the CPU 21 goes to other processing (step A8). If, on the other hand, the decision is that the direction key is depressed (YES in step A7), then the CPU 21 selects another word in accordance with the direction specified by the direction key in the direction keys 122, then updates the selected word storage area 253 and stores the newly selected word in it (step A9).

The CPU 21 next makes a decision of whether or not the determination key 123 is depressed (step A10). If the decision is that the determination key 123 is not depressed (NO in step A10), the CPU 21 returns to step A7.

FIG. 8C shows an exemplary display screen 103 which appears when the jump key 121 is depressed in step A3 and the direction key 122 is then depressed repeatedly so that the word 104 is selected. The word 104 is reversed in order to indicate that it is in the selected state.

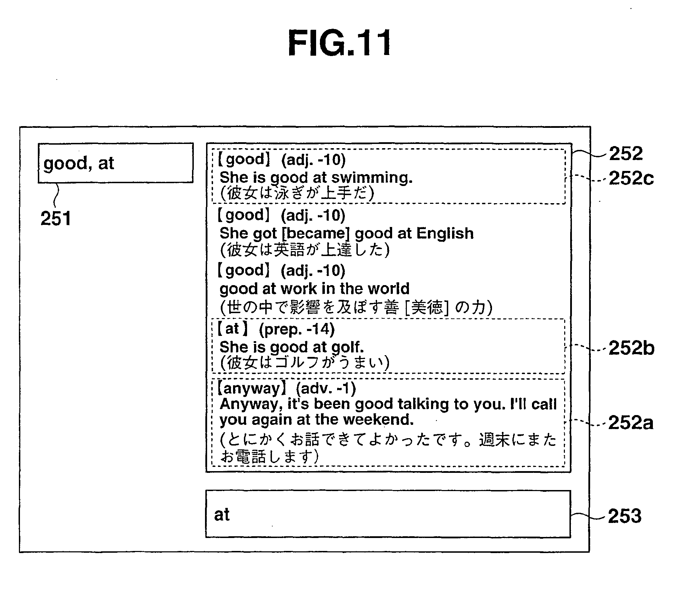

FIG. 11 shows exemplary stored contents of the retrieval word storage area 251, the illustrative sentence storage area 252 and the selected word storage area 253 when the jump key 121 is depressed in step A3 and the desired one of the direction key 122 is then depressed repeatedly so that the word 104 is selected. In the selected word storage area 253 is stored the word, "at", which is in the selected state.

If, on the other hand, the decision in step A10 is that the determination key 123 has been depressed (Yes in step A11), then the CPU 21 displays items to which a jump can be made in a window on the display unit 23 (step A11).

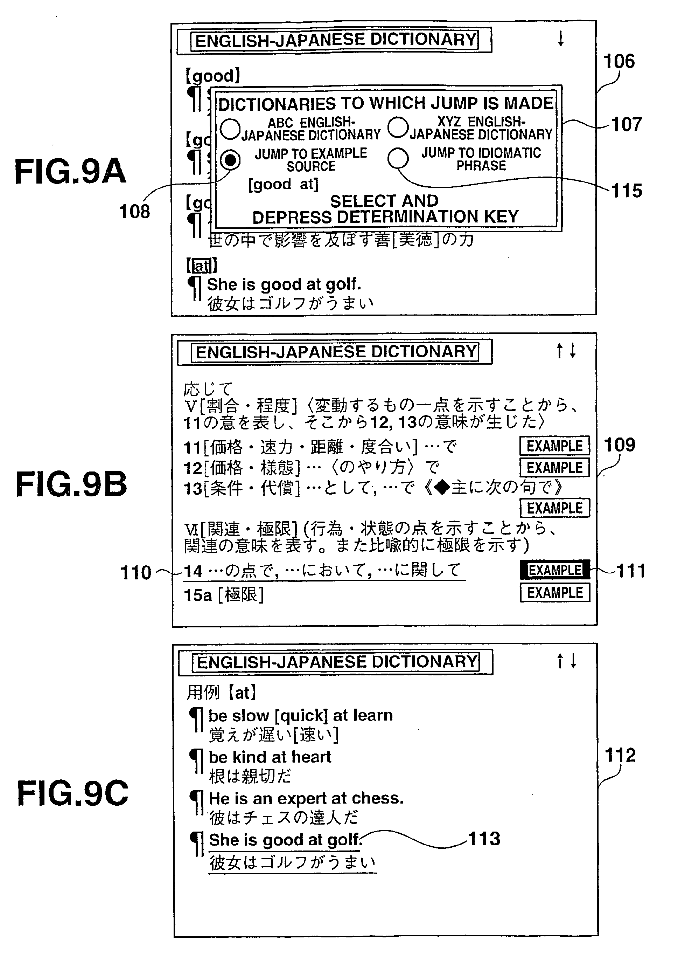

FIG. 9A shows an exemplary display screen 106 which appears when the determination key 123 is depressed in step A10. In a window 107 are displayed items to which a jump can be made. In determining an item to which a jump is to be made, the user selects the radio button corresponding to that item and then depresses the determination key 123.

The CPU 21 makes a decision of whether the radio button 108 corresponding to the jump to example source has been selected and the determination key 123 has been depressed (step A12). If the decision is that the radio button 108 has been selected and the determination key 123 has been depressed (Yes in step A12), the CPU 21 makes a decision of whether or not the word stored in the selected word storage area 253 is identical to one of the retrieval words stored in the retrieval word storage area 251 (step A13).

If the decision is that the word stored in the selected word storage area 253 is identical to one of the retrieval words stored in the retrieval word storage area 251 (Yes in step A13), then the CPU 21 extracts the source entry word and the source meanings associated with illustrative sentences containing the selected word from the illustrative sentence data table 2632 shown in FIG. 4. The CPU 21 then reads from the entry word data table 2631 shown in FIG. 3 explanatory information corresponding to the extracted source meanings in explanatory information corresponding to the extracted source entry word and displays it on the display unit 23 (step A14). In addition, the CPU 21 puts the example (quotation) button corresponding to that meaning into the selected state.

FIG. 9B shows an exemplary display screen 109 which appears in step A14. For example, the explanatory information 110 for the meaning corresponding to the selected word is underlined, for example, for easier viewing. Alternatively, the explanatory information 110 may be reversed or changed in font or color. The example button 111 corresponding to the explanatory information 110 is automatically placed in the selected state.

If, on the other hand, the decision in step A13 is that the word stored in the selected word storage area 253 differs from any of the retrieval words stored in the retrieval word storage area 251 (step A13), then the CPU 21 uses the word stored in the selected word storage area 253 as an entry word to read explanatory information for that entry word from the entry word data table 2631 and display it on the display unit (step A15).

If the decision in step A12 is that the jump to example source is not selected, then the CPU 21 makes a decision of whether or not the radio button 115 for jump to idiomatic phrase has been selected (step A16). If the radio button 115 is not selected (No in step A16), then the CPU 21 goes to other processing (step A18).

If the radio button 115 for jump to phrase has been selected (Yes in step A16), then the CPU 21 extracts an idiomatic phrase or phrases containing all the retrieval words stored in the retrieval word storage area 251 and associated explanatory information from the idiomatic phrase data table 2633 shown in FIG. 5 and displays them on the display unit 23 (step A17). For example, if "good" and "at" are stored in the retrieval word storage area 251, an idiomatic phrase, "make a good [poor] fist at [of] ∼", that contains both "good" and "at" is retrieved from the phrase data table 2633 and displayed together with explanatory information. The user therefore don't have to perform such idiomatic phrase retrieval as involves reentry of a retrieval word on the data entry panel, allowing idiomatic phrase retrieval to be carried out immediately. Then, the jump-to-source processing is complete.

FIG. 9C shows an exemplary display screen 112 which appears after the determination key 123 is depressed when the example button 111 is in the selected state on the display screen 109 shown in FIG. 9B. A list of examples for the meaning number "14" of the entry word "at" is displayed on the display screen 112. Further, an example that contains all the retrieval words stored in the retrieval word storage area 251 is displayed in a special way. For example, if "good" and "at" are stored in the retrieval word storage area 251, the example 113 is displayed underlined.

As described above, in retrieving an illustrative sentence on the basis of an entered retrieval word, selecting a word contained in the retrieved illustrative sentence, and displaying the meaning of that word, when the word is identical to the source entry word for the illustrative sentence, explanatory information of the corresponding source meaning is displayed on the display unit 23. Thus, even if the selected word bears a number of meanings, the user is allowed to confirm the desired meaning with a single glance without scrolling.

Moreover, by rearranging retrieved illustrative sentences the source entry words of which are retrieval words in accordance with the order in which the retrieval words are entered and displaying the rearranged illustrative sentences, the user is allowed to confirm a desired illustrative sentence immediately without scrolling.

Furthermore, by displaying an example containing all the retrieval words in a special way in listing explanatory information of sources corresponding to illustrative sentences and examples of the explanatory information, the user is allowed to recognize immediately the display of the meaning of a selected word.

Although the invention has been described in terms of one specific application to an electronic dictionary, the principles of the invention are equally applicable to electronic equipment in general, such as a mobile phone, personal computer, electronic watch, etc. Electronic dictionary data may be stored on a medium, such as a memory card, a CD, or the like, that can be removably attached to the electronic dictionary body.

Although the embodiment has been described as connecting the electronic dictionary 1 to the dictionary server 310 through the network 300 and downloading entry words from the net dictionary DB 320 to the dictionary, this is not restrictive. For example, entry words may be downloaded from a dictionary DB stored on a CD-ROM which is removably attached to a personal computer connected by a cable to the dictionary.

## Claims

1. An information display control device comprising:
an entry word information storage means (2631) for storing entry words in association with explanatory information for each of their meanings;
an illustrative sentence storage means (2632) for storing illustrative sentences, each illustrative sentence being stored in association with one of the stored entry words;
an illustrative sentence display control means (21) for displaying stored illustrative sentences and corresponding entry words that are stored in association with the displayed illustrative sentences; and
a word selecting means (22) for selecting a word in accordance with a user's operation, said word being selected from either one of the displayed illustrative sentences or one of the displayed entry words; and
an explanatory information display control means (21) for displaying explanatory information of the selected word;
**characterized in that**
each illustrative sentence is further stored in association with a meaning of the corresponding entry word;
the explanatory information display control means (21) is adapted for displaying explanatory information for the meaning stored in association with the illustrative sentence to which the selected word corresponds if the selected word is one of the displayed entry words, and for displaying explanatory information of a retrieved entry word if the selected word is not one of the displayed entry words, said retrieved entry word being retrieved from the entry word information storage means (2631) by using the selected word as a new retrieval word.

2. The information display control device according to claim 1, wherein the explanatory information display control means (21) is adapted for reading explanatory information of the entry word stored in association with the corresponding illustrative sentence from the entry word information storage means and for highlighting the displayed explanatory information of the meaning of the entry word, when the selected word is one of the displayed entry words.

3. The information display control device according to claim 1, **characterized by** further comprising:
an entering means for entering a number of words serving as retrieval words in accordance with a user's operation; and
a retrieval means (21) for retrieving illustrative sentences including all words entered by the entering means; and
wherein the illustrative sentence display control means (21) is adapted for displaying a first retrieved illustrative sentence prior to a second retrieved illustrative sentence, if an entry word stored in the illustrative sentence storage means in association with the first retrieved illustrative sentence is identical with one of the entered words and if neither of the entry words stored in the illustrative sentence storage means in association with the second retrieved illustrative sentence is identical with one of the entered words.

4. An information retrieving and displaying method comprising the steps of;
storing entry words in association with explanatory information for each of their meanings;
storing illustrative sentences, wherein each illustrative sentence is stored in association with one of the stored entry words;
displaying (A2) stored illustrative sentences and corresponding entry words that are stored in association with the displayed illustrative sentences; and
selecting (A4, A9) a word in accordance with a user's operation, said word being selected from either one of the displayed illustrative sentences or one of the displayed entry words; and
displaying (A14, A15) explanatory information of the selected word;
**characterized in that**
each illustrative sentence is further stored in association with a meaning of the corresponding entry word; and **in that**
the step of displaying (A14, A15) explanatory information further comprises the steps of
displaying (A14) explanatory information for the meaning stored in association with the illustrative sentence to which the selected word corresponds if the selected word is one of the displayed entry words, and of
displaying (A15) explanatory information of a retrieved entry word if the selected word is not one of the displayed entry words, said retrieved entry word being retrieved from the stored entry words by using the selected word as a new retrieval word.

5. A computer program product comprising a computer readable medium having computer readable program code embodied thereon, the program code being adapted to carry out all steps of claim 4.

## Patentansprüche

1. Informationsanzeige-Steuervorrichtung, enthaltend:
eine Eintragswort-Informationsspeichereinrichtung (2631) zum Speichern von Eintragswörtern in Zuordnung mit Erläuterungsinformationen für jede ihrer Bedeutungen;
eine Beispielsatz-Speichereinrichtung (2632) zum Speichern von Beispielsätzen, wobei jeder Beispielsatz in Zuordnung mit einem der gespeicherten Eintragswörter gespeichert ist;
eine Beispielsatz-Anzeigesteuereinrichtung (21) zum Anzeigen gespeicherter Beispielsätze und entsprechender Eintragswörter, die in Zuordnung mit den angezeigten Beispielsätzen gespeichert sind; und
eine Wortauswahleinrichtung (22) zum Auswählen eines Wortes in Übereinstimmung mit der Tätigkeit eines Benutzers, wobei das Wort entweder aus einem der angezeigten Beispielsätze oder aus einem der angezeigten Eintragswörter gewählt ist; und
eine Erläuterungsinformations-Anzeigesteuereinrichtung (21) zum Anzeigen von Erläuterungsinformationen des gewählten Wortes;
**dadurch gekennzeichnet, dass**
jeder Beispielsatz zudem in Zuordnung mit einer Bedeutung des entsprechenden Eintragswortes gespeichert ist;
die Erläuterungsinformations-Anzeigesteuereinrichtung (21) dazu eingerichtet ist, Erläuterungsinformationen für die Bedeutung, die in Zuordnung mit dem Beispielsatz gespeichert ist, dem das gewählte Wort entspricht, anzuzeigen, sofern das gewählte Wort eines der angezeigten Eintragswörter ist, und Erläuterungsinformationen eines abgerufenen Eintragswortes anzuzeigen, wenn das gewählte Wort nicht eines der angezeigten Eintragswörter ist, wobei das abgerufene Eintragswort aus der Eintragswort-Informationsspeichereinrichtung (2631) mit Hilfe des gewählten Wortes als neues Abrufwort abgerufen wird.

2. Informationsanzeige-Steuervorrichtung nach Anspruch 1, bei der die Erläuterungsinformations-Anzeigesteuereinrichtung (21) dazu eingerichtet ist, Erläuterungsinformationen des Eintragswortes, das in Zuordnung mit dem entsprechenden Beispielsatz gespeichert ist, aus der Eintragswort-Informationsspeichereinrichtung zu lesen und die angezeigten Erläuterungsinformationen der Bedeutung des Eintragswortes hervorzuheben, wenn das gewählte Wort eines der angezeigten Eintragswörter ist.

3. Informationsanzeige-Steuervorrichtung nach Anspruch 1, **dadurch gekennzeichnet, dass** sie weiterhin enthält:
eine Eingabeeinrichtung zum Eingeben mehrerer Wörter, die als Abrufwörter dienen, gemäß einer Tätigkeit des Benutzers; und
eine Abrufeinrichtung (21) zum Abrufen von Beispielsätzen, die sämtliche Wörter enthalten, die mit der Eingabeeinrichtung eingegeben werden; und
die Beispielsatz-Anzeigesteuereinrichtung (21) dazu eingerichtet ist, einen ersten abgerufenen Beispielsatz vor einem zweiten abgerufenen Beispielsatz anzuzeigen, wenn ein Eintragswort, das in der Beispielsatz-Speichereinrichtung in Zuordnung mit dem ersten abgerufenen Beispielsatz gespeichert ist, identisch mit einem der eingegebenen Wörter ist, und wenn keines der Eintragswörter, die in der Beispielsatz-Speichereinrichtung in Zuordnung mit dem zweiten abgerufenen Beispielsatz gespeichert sind, identisch mit einem der eingegebenen Wörter ist.

4. Informations-Abruf-/Anzeigeverfahren, enthaltend folgende Schritte:
Speichern von Eintragswörtern in Zuordnung mit Erläuterungsinformationen für jede ihrer Bedeutungen;
Speichern von Beispielsätzen, wobei jeder Beispielsatz in Zuordnung mit einem der gespeicherten Eintragswörter gespeichert wird;
Anzeigen (A2) gespeicherter Beispielsätze und entsprechender Eintragswörter, die in Zuordnung mit den angezeigten Beispielsätzen gespeichert sind; und
Auswählen (A4, A9) eines Wortes in Übereinstimmung mit der Tätigkeit eines Benutzers, wobei dieses Wort entweder aus einem der angezeigten Beispielsätze oder einem der angezeigten Eintragswörter gewählt wird; und
Anzeigen (A14, A15) von Erläuterungsinformationen des gewählten Wortes;
**dadurch gekennzeichnet, dass**
jeder Beispielsatz zudem in Zuordnung mit einer Bedeutung des entsprechenden Eintragswortes gespeichert wird, und **dadurch**, dass
der Schritt des Anzeigens (A14, A15) der Erläuterungsinformationen weiterhin folgende Schritte enthält:
Anzeigen (A14) von Erläuterungsinformationen für die Bedeutung, die in Zuordnung mit dem Beispielsatz gespeichert ist, dem das gewählte Wort entspricht, sofern das gewählte Wort eines der angezeigten Eintragswörter ist, und
Anzeigen (A15) von Erläuterungsinformationen eines abgerufenen Eintragswortes, sofern das gewählte Wort nicht eines der angezeigten Eintragswörter ist, wobei das abgerufene Eintragswort aus den gespeicherten Eintragswörtern mit Hilfe des gewählten Wortes als neues Eintragswort abgerufen wird.

5. Computerprogrammerzeugnis, enthaltend ein computerlesbares Medium mit einem darauf befindlichen computerlesbaren Programmcode, wobei der Programmcode dazu eingerichtet ist, sämtliche Schritte von Anspruch 4 auszuführen.

## Revendications

1. Dispositif de commande d'affichage d'information comprenant :
un moyen de stockage d'information de mot d'entrée (2631) pour stocker des mots d'entrée en association avec une information explicative pour chacune de leurs significations ;
un moyen de stockage de phrase illustrative (2632) pour stocker des phrases illustratives, chaque phrase illustrative étant stockée en association avec l'un des mots d'entrée stockés ;
un moyen de commande d'affichage de phrase illustrative (21) pour afficher des phrases illustratives stockées et des mots d'entrée correspondants qui sont stockés en association avec les phrases illustratives affichées ; et
un moyen de sélection de mot (22) pour sélectionner un mot conformément à une opération d'utilisateur, ledit mot étant sélectionné à partir de soit l'une des phrases illustratives affichées, soit l'un des mots d'entrée affichés ; et
un moyen de commande d'affichage d'information explicative (21) pour afficher une information explicative du mot sélectionné,
**caractérisé en ce que** :
chaque phrase illustrative est en outre stockée en association avec une signification du mot d'entrée correspondant ;
le moyen de commande d'affichage d'information explicative (21) est adapté pour afficher une information explicative pour la signification stockée en association avec la phrase illustrative à laquelle le mot sélectionné correspond si le mot sélectionné est l'un des mots d'entrée affichés et pour afficher une information explicative d'un mot d'entrée retrouvé si le mot sélectionné n'est pas l'un des mots d'entrée affichés, ledit mot d'entrée retrouvé étant retrouvé à partir du moyen de stockage d'information de mot d'entrée (2631) en utilisant le mot sélectionné en tant que nouveau mot de recherche.

2. Dispositif de commande d'affichage d'information selon la revendication 1, dans lequel le moyen de commande d'affichage d'information explicative (21) est adapté pour lire une information explicative du mot d'entrée stocké en association avec la phrase illustrative correspondante à partir du moyen de stockage d'information de mot d'entrée et pour sur-éclairer l'information explicative affichée qui constitue la signification du mot d'entrée lorsque le mot sélectionné est l'un des mots d'entrée affichés.

3. Dispositif de commande d'affichage d'information selon la revendication 1, **caractérisé en ce qu'**il comprend en outre :
un moyen d'entrée pour entrer un certain nombre de mots jouant le rôle de mots de recherche conformément à une opération d'utilisateur ; et
un moyen de recherche (21) pour retrouver des phrases illustratives incluant tous les mots entrés au moyen du moyen d'entrée ; et
dans lequel le moyen de commande d'affichage de phrase illustrative (21) est adapté pour afficher une première phrase illustrative retrouvée avant une seconde phrase illustrative retrouvée si un mot d'entrée stocké dans le moyen de stockage de phrase illustrative en association avec la première phrase illustrative retrouvée est identique à l'un des mots entrés et si aucun des mots d'entrée stockés dans le moyen de stockage de phrase illustrative en association avec la seconde phrase illustrative retrouvée n'est identique à l'un des mots entrés.

4. Procédé de recherche et d'affichage d'information comprenant les étapes de :
stockage de mots d'entrée en association avec une information explicative pour chacune de leurs significations ;
stockage de phrases illustratives, où chaque phrase illustrative est stockée en association avec l'un des mots d'entré stockés ;
affichage (A2) de phrases illustratives stockées et de mots d'entré correspondants qui sont stockés en association avec les phrases illustratives affichées ; et
sélection (A4, A9) d'un mot conformément à une opération d'utilisateur, ledit mot étant sélectionné à partir de soit l'une des phrases illustratives affichées, soit l'un des mots d'entré affichés ; et
affichage (A14, A15) d'une information explicative du mot sélectionné,
**caractérisé en ce que**:
chaque phrase illustrative est en outre stockée en association avec une signification du mot d'entré correspondant ; et **en ce que**
l'étape d'affichage (A14, A15) d'une information explicative comprend en outre les étapes de :
affichage (A14) d'une information explicative pour la signification stockée en association avec la phrase illustrative à laquelle le mot sélectionné correspond si le mot sélectionné est l'un des mots d'entré affichés et
affichage (A15) d'une information explicative d'un mot d'entré retrouvé si le mot sélectionné n'est pas l'un des mots d'entré affichés, ledit mot d'entré retrouvé étant retrouvé à partir des mots d'entrée stockés en utilisant le mot sélectionné en tant que nouveau mot de recherche.

5. Produit de programme d'ordinateur comprenant un support d'information lisible par ordinateur comportant noyé dessus un code de programme lisible par ordinateur, le code de programme étant adapté pour mettre en oeuvre toutes les étapes de la revendication 4.
